# EUROPEAN PATENT SPECIFICATION

(11) **EP 0 762 024 B1**
(45) Date of publication and mention of the grant of the patent: **04.12.2002**
(21) Application number: 96830390.9
(22) Date of filing: 11.07.1996
(51) Int. Cl.: F16K 27/12, G05D 16/02, F16K 24/00

(54) **Gas pressure regulator with element for protection and customization on the cover**
Gasdruckregler mit Element zum Schutz und zur individuellen Kundenanpassung auf dem Deckel
Régulateur de pression de gaz avec élément de protection et d'adaptation sur le couvercle aux besoins d'un consommateur

(30) Priority: 08.09.1995 IT BS950078 U
(43) Date of publication of application: 12.03.1997
(73) Proprietor: NOVA COMET S.r.l., I-25030 Torbole Casaglia (Brescia) (IT)
(72) Inventor: Ravazzolo, Romano, 25100 Brescia (IT)
(74) Representative: Manzoni, Alessandro

(56) References cited:
- CA-A- 1 322 144
- DE-C- 813 813
- DE-U- 7 709 024
- DE-U- 7 739 175
- US-A- 3 225 479

## Description

The present invention pertains to a gas regulator which is simplified from a structural standpoint, improved for protection and safety, and easy to customize.

A pressure regulator must usually give information on the outside, such as operating particulars, reference code, manufacturer's trademark, etc..

This information can be given, for example, by casting or by means of a label.

Pressure regulators, depending on the countries they are destined for, can differ in their connecting fittings, on both inlet and outlet and in the type of adjustment, for the ranges of operating pressures and the preadjustment pressures.

In addition to the above lettering, a regulator, like every product, can be further customized in its colour, consignee's trademark and/or another element.

Installation of the regulator depending on the reference standards and/or practices of using rooms may be done either indoors or outdoors; in this last case, the regulator must be protected against the rain and atmospheric agents in general.

It is likewise known that a pressure regulator, on its top or cover, has a small hole connecting it with the atmosphere to balance internal/external pressure.

This small hole is generally obtained directly in the cover in such a position as not to allow any damage to the internal diaphragm of the regulator if the user inserts a metal wire into the hole.

This hole, precisely due to its small size and because it is directly in contact with the atmosphere and is crossed in both directions (incoming and outgoing) by the stream of air due to the continual movement of the diaphragm, can easily be blocked causing the regulator to malfunction. This blockage may be caused either by water in the form of moisture mixed with. dust and impurities in the air or by this same moisture freezing in the colder season or in particularly cold and rainy areas, such as in North European countries.
In some cases an obstruction has also been noted due to oxidation of the metal of the internal wall of this hole.

Patent DE-C- 813 813 already discloses a gas pressure regulator comprising a body with a cover having a breather hole and a cap applied onto said cover and suitable to protect it and its breather hole. Anyway, even if such a cap can protect the cover and its breather hole against the rain and atmospheric agents in general, it can't prevent the breather hole obstruction due to moisture mixed with dust and impurities in the air, to the same moisture freezing and/or to oxidation of the metal of the internal wall of this hole. Moreover, the cap is not provided of any support for lettering, references and customizing.

It is an object of the present invention to prevent the above mentioned disadvantages by providing a regulator according to the features of claim 1, in which a cap is fitted onto the body of the regulator with the functions of protection and acting as a support for lettering, references and customizing, the cap having a stem designed to fit into and lock inside the hole of the cover in order to protect its profile against obstruction.

The protective cap is in stainless material, with a good exterior appearance, equipped with a quick and simple fixing system after fitting the regulator, and it has an air passage system for the cover to breathe so as to protect it from rain and from the possibility of foreign bodies obstructing the hole connecting with the atmosphere. The regulator may thus be used outdoors as well, with no special precautions. The cap also has a flat central portion on which, by means of casting or screen printing, it is possible to obtain labelling or hot marking in the case of thermo-plastic resins, lettering and various references. It can moreover be made in different colours to make customizing simpler during the production phase.

The gas pressure regulator proposed herein is defined by the features of claim 1.

It shall anyhow be described in greater detail by the continuation of the description, made with reference to the accompanying drawings, in which:
Figure 1 is partial longitudinal cross-sectional view of a pressure regulator complete with protective cap;
Figure 2 is a view of the inside of the protective cap; and
Figure 3 is an enlarged detail of the protective cap.

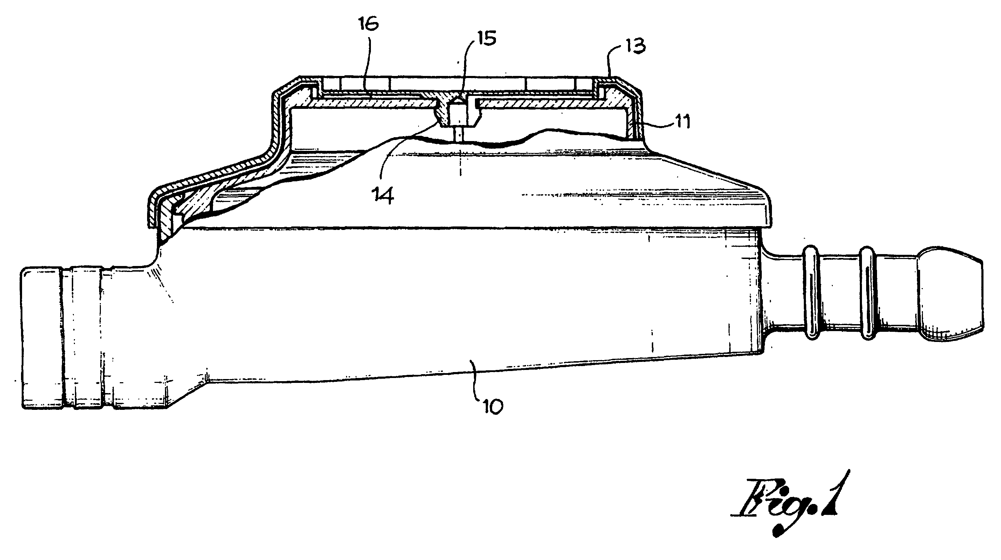

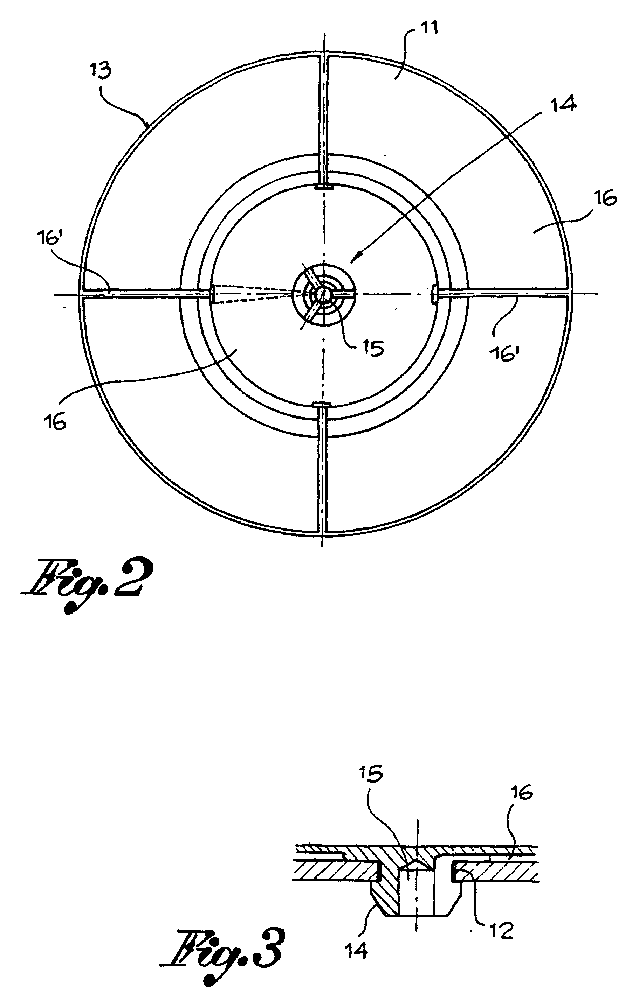

The above mentioned drawings indicate with 10 the body of a gas pressure regulator having, in a manner known in itself, a cover 11 with a breather hole 12. According to this invention the cover 11 is fitted with a cap 13 in a stainless material, for example, but not necessarily, in a plastic material, designed to cover the cover.

The cap is fixed to the cover 11 peripherally and/or in the centre.

More specifically, the cap 13 has a stem 14 designed to fit into and snap-lock inside the breather hole 12 of the regulator cover. This stem itself defines a blind hole 15 with radial channels opened outwards, defined by ribs 16' together forming a grid for air circulation, without moreover the possibility of foreign elements from the outside' getting inside the body. With such an application the cap acts as an element protecting the cover and its stem covers and protects the profile of the hole of the cover from contact with external atmospheric agents. Finally, the cap has at least one central flat portion on which it is possible to reproduce lettering and various information for the desired customization by means of any method or means.

In practice, the cap protects from the rain, prevents foreign bodies getting inside the regulator, prevents oxidation at the level of the hole in the regulator cover, and it allows easily customizing the device.

## Claims

1. A gas pressure regulator (10) comprising a body with a cover (11) having a breather hole (12), a cap (13) in stainless material applied onto said cover to protect it and its breather hole against rain and atmospheric agents in general, said cap also forming a coloured support surface for lettering and information to customize the regulator, **characterized in that** said cap (13) has a stem (14) designed to fit into and lock inside the hole (12) of the cover (11) and a grid of radial breather channels (16) starting out from said stem (14) towards the outside of the cover (11).

2. A regulator according to claim 1, wherein said cap (13) has at least one surface to receive the customizing elements.

## Patentansprüche

1. Ein Gasdruckregler (10) bestehend aus einem Körper mit einem Deckel (11) mit Entlüftungsioch (12) und einer auf dem Deckel angebrachten Kappe (13) aus rostfreiem Material zum Schutz des Reglers und des Entlüftungslochs vor Regen und Witterungseinflüssen im Allgemeinen, wo besagte Kappe auch eine farbige Auflagefläche für Notizen und Informationen zur individuellen Gestaltung des Reglers bildet, **gekennzeichnet durch** die Tatsache, dass die besagte Kappe (13) mit einem Schaft (14) ausgestattet ist, der dazu konzipiert ist, sich an das Loch (12) des Deckels (11) anzupassen und sich in ihm zu blockieren, und mit einem Gitter mit radialen Entiüftungskanälen (16), die sich vom besagten Schaft (14) nach Außen des Deckels (11) hin erstrecken.

2. Ein Regler gemäß Anspruch 1, bei dem die besagte Kappe (13) mit mindestens einer Fläche zur Aufnahme der Elemente zur individuellen Gestaltung versehen ist.

## Revendications

1. Un régulateur de pression de gaz (10) constitué par un corps muni d'un couvercle (11) doté d'un orifice d'évent (12), une calotte (13) en matériau inoxydable appliqué sur le couvercle afin de protéger le régulateur et l'orifice d'évent de la pluie et des agents atmosphériques en général, où la calotte forme également une surface de support de couleur pour annotations et informations en vue de personnaliser le régulateur, **caractérisé en ce que** la calotte (13) est munie d'une tige (14) étudiée pour s'adapter et se bloquer dans l'orifice (12) du couvercle (11), et d'une grille de canaux radiaux d'évent (16) qui s'étendent à partir de la tige (14) vers l'extérieur du couvercle (11).

2. Un régulateur aux termes de la revendications 1 où la calotte (13) présente au moins une surface apte à recevoir les éléments pour la personnalisation.
